# FASCICULE DE BREVET EUROPEEN

(11) **EP 4 122 663 B1**
(45) Date de publication et mention de la délivrance du brevet: **26.08.2026**
(21) Numéro de dépôt: 21186465.7
(22) Date de dépôt: 19.07.2021
(51) Int. Cl.: B28B 11/08, C04B 35/486, G04B 3/04, B28B 1/00, B28B 1/24, G04B 19/04, G04B 19/12, G04B 19/28, G04B 37/22, G04D 3/00

(54) **ARTICLE MULTICOLORE EN CERMET ET/OU CÉRAMIQUE ET SON PROCÉDÉ DE FABRICATION**
MEHRFARBIGER ARTIKEL AUS ZERMET UND/ODER KERAMIK UND SEIN HERSTELLUNGSVERFAHREN
MULTI-COLOURED ITEM MADE FROM CERMET AND/OR CERAMIC AND MANUFACTURING METHOD THEREOF

(43) Date de publication de la demande: 25.01.2023
(73) Titulaire: Comadur S.A., 2400 Le Locle (CH)
(72) Inventeur: CORDIER, Thierry, 1789 Lugnorre (CH); LE COLLETER, Alexandre, 25800 Etray (FR); MOREAU, Julien, 25500 Morteau (FR); CHOPARD-LALLIER, Pascal, 25500 Montlebon (FR)
(74) Mandataire: ICB SA

(56) Documents cités:
- WO-A1-2015/150552
- CH-A2- 715 336
- CN-A- 108 439 997

## Description

### DOMAINE TECHNIQUE

La présente invention se rapporte à un procédé de fabrication par injection d'un article en cermet et/ou en céramique multicolore avec un décor en relief.

### ART ANTERIEUR

Les composants horlogers en céramique ou en cermet sont généralement obtenus par un procédé d'injection d'une matière suivi d'un frittage. Ces composants présentent souvent un décor, tel que des index et des chiffres pour une lunette, qui est de couleur distincte du reste du composant. Les éléments du décor sont généralement rapportés par brasage ou collage sur l'ébauche issue du frittage. Cet assemblage mécanique entre l'ébauche et les éléments du décor peut se révéler coûteux et compliqué à mettre en œuvre.

Une alternative à cet assemblage mécanique consiste à réaliser une ébauche par injection de matières de couleurs différentes avec une couleur destinée à former le décor après usinage. Cependant, fabriquer des composants en céramique ou en cermet avec des couleurs différentes s'avère complexe. En effet, un retrait important, qui peut s'élever à 30%, est observé lors du frittage. Le taux de retrait va être dépendant de plusieurs facteurs qui sont entre autres le choix du matériau et le volume de matière injectée. Il peut s'ensuivre dans les procédés bi-injection ou de manière plus générale multi-injection, des différences de retrait lors du frittage qui vont mener à une désolidarisation à la jonction entre les différentes matières.

Pour pallier à cet inconvénient, il a été proposé dans le document EP 2 746 243 d'injecter une seule matière et d'imprégner une partie du corps vert avant frittage avec une solution comprenant un métal agissant comme pigment. Ce procédé présente cependant pour désavantage qu'il est difficile d'obtenir une couleur uniforme dans la masse de la partie colorée.

Le document WO 2015/150552 montre un procédé de fabrication d'un composant horloger pourvu d'un insert en matière composite.

### RESUME DE L'INVENTION

La présente invention a pour objet de pallier aux désavantages précités en proposant un nouveau procédé d'injection multi-matière limitant les différences de retrait entre les matières de couleurs distinctes injectées, avec une étape ultérieure d'usinage du décor dans une des couleurs.

A cet effet, la présente invention se rapporte à un procédé de fabrication faisant appel lors de l'étape d'injection à un insert présentant une structure en relief ou en creux destinée à imprimer sur la première matière injectée une surface d'accroche pour la seconde matière injectée. Cette surface d'accroche permet de maintenir la seconde matière injectée et ainsi de réduire le retrait lors de l'étape de frittage.

Plus précisément, le procédé de fabrication de l'article selon l'invention comporte les étapes suivantes :
- Mise à disposition d'au moins une première matière et une seconde matière, ladite première matière se distinguant de la seconde matière par sa composition chimique et plus particulièrement par sa couleur, lesdites première et seconde matières étant soit une céramique, soit un cermet,
- Mise à disposition d'un moule avec une empreinte comprenant une portion munie d'une structure en relief ou en creux destinée à former la surface d'accroche sur la première matière,
- Injection de ladite première matière dans l'empreinte munie de la portion de manière à imprimer la structure sur une partie de la première matière et ainsi former la surface d'accroche sur ladite partie,

- Injection de la seconde matière sur la première matière au moins au niveau de la surface d'accroche pour former un corps vert,
- Frittage du corps vert pour former une ébauche,
- Usinage par ablation laser d'au moins la seconde matière pour réaliser le décor dans ladite seconde matière sur fond de ladite première matière,
- Finition de l'ébauche pour obtenir l'article.

Avantageusement, le procédé comprend en outre une autre étape d'usinage avant et/ou après l'étape de frittage pour mettre à dimension respectivement le corps vert et/ou l'ébauche.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

La figure 1 représente une vue tridimensionnelle de la double empreinte de la partie fixe du moule avec une des deux empreintes comprenant un insert avec une structure en relief selon l'invention.
La figure 2 représente une vue tridimensionnelle de l'insert avec la structure en relief.
La figure 3 représente une vue en coupe du moule lors respectivement de l'injection de la première matière à droite et de la seconde matière à gauche.
La figure 4 représente une vue tridimensionnelle du corps vert issu de la bi-injection de matières.
La figure 5 représente une vue partielle du corps vert de la figure 4.
La figure 6 représente une vue tridimensionnelle d'une lunette décorée issue du procédé de fabrication selon l'invention.
La figure 7 représente une vue en plan d'une lunette décorée issue du procédé de fabrication selon l'invention.

### DESCRIPTION DETAILLEE

La présente invention se rapporte à un procédé de fabrication par injection d'un article réalisé avec au moins deux matières distinctes qui sont soit un cermet, soit une céramique. On entend par matières distinctes des matières se différentiant par leur aspect esthétique, et en particulier leur couleur. Cela traduit par des différences de compositions chimiques. Il peut s'agir d'une même matière de base avec des pigments différents pour changer la couleur ou de matières de base différentes. A titre d'exemple, il peut s'agir d'une même matière de base en oxyde de zirconium avec, d'une part, un pigment noir pour obtenir une matière noire et, d'autre part, de l'alumine pour obtenir la couleur blanche. De manière plus générale, les céramiques peuvent être des nitrures, des carbures et/ou des oxydes. De même, les cermets peuvent comporter une phase céramique comportant des carbures, des nitrures et/ou des oxydes et une phase d'un liant métallique choisi, par exemple, parmi les éléments précieux tels que le ruthénium, le rhodium, le palladium, l'osmium, de l'iridium, le platine, l'or et l'argent.

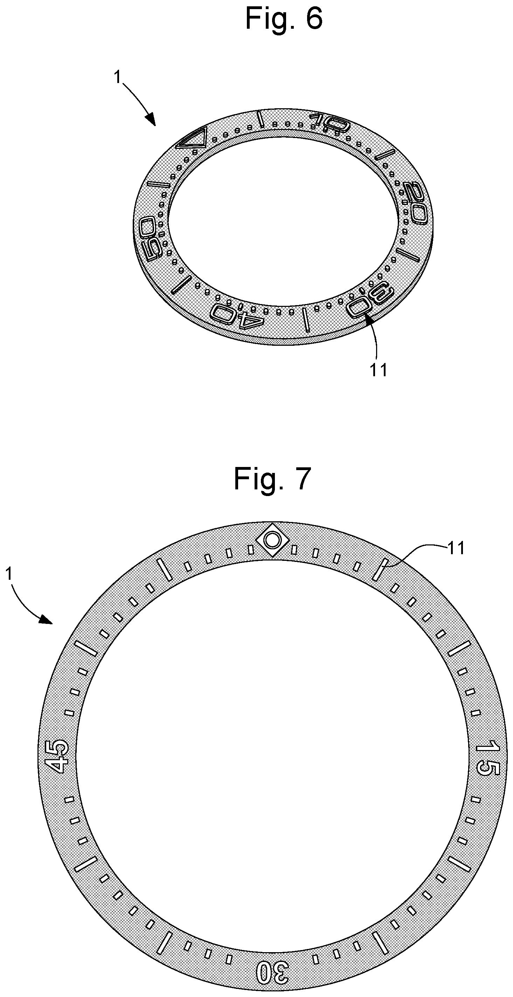

L'article selon l'invention peut être un article décoratif tel qu'un élément constitutif de montres, bijoux, bracelets, etc. Dans le domaine horloger, cet article peut être un composant d'habillage tel qu'une carrure, un fond, une lunette, un insert de lunette, un poussoir, une couronne, un maillon de bracelet, une boucle, un cadran, une aiguille, un index de cadran, etc. Il peut également s'agir d'un composant du mouvement tel qu'une masse oscillante, une platine, etc. A titre illustratif, l'article est une lunette 1 réalisée avec deux céramiques de couleurs différentes, par exemple le noir et le blanc, avec une couleur qui forme le fond et une autre couleur qui forme le décor 11 tel que représenté aux figures 6 et 7. Toujours à titre d'exemple, il pourrait s'agir d'un sigle sur une couronne de montre.

L'article est réalisé par injection des matières différentes pour former un corps vert et par frittage dudit corps vert. Le procédé de fabrication est illustré ci-après pour un article comprenant deux matières distinctes mais il pourrait s'agir d'un article comprenant 3, 4, etc. matières différentes avec réalisation d'une surface d'accroche pour chacune des matières successives injectées. De même, il est illustré pour un article avec un décor d'une même couleur alors qu'il pourrait y avoir des décors de couleurs différentes.

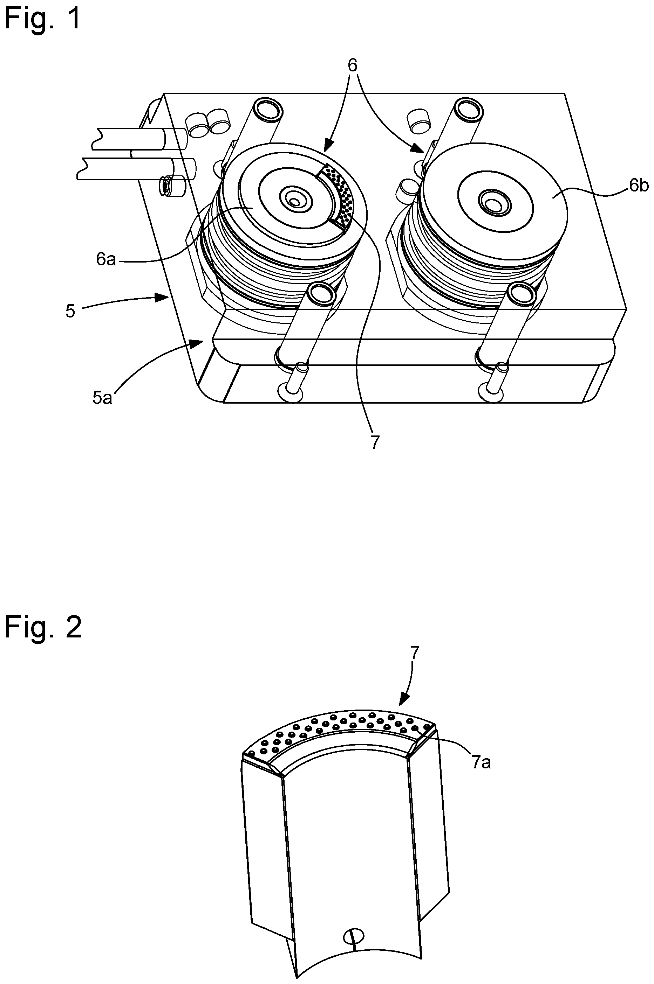

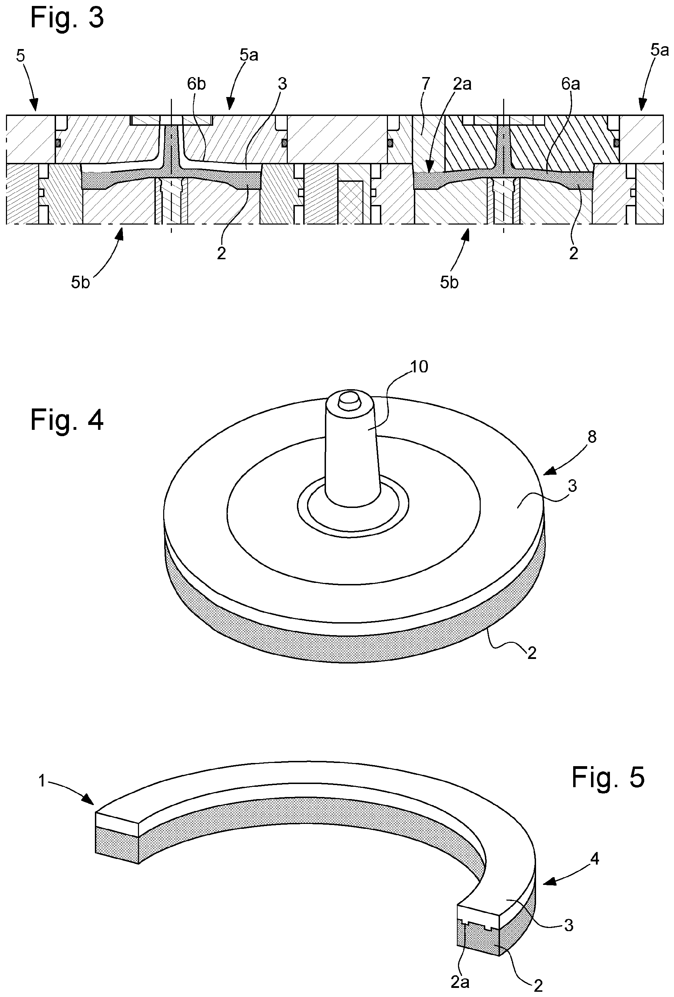

Le procédé de fabrication comporte les étapes suivantes en référence aux figures 1 à 7:
- Mise à disposition d'au moins une première matière 2 et une seconde matière 3, ladite première matière se distinguant de la seconde matière par sa couleur et donc par sa composition chimique, lesdites première et seconde matières étant soit une céramique, soit un cermet. Ainsi, les première et seconde matières peuvent être toutes les deux une céramique ou toutes les deux un cermet ou encore une matière peut être une céramique et l'autre un cermet,
- Mise à disposition d'un moule 5 avec une empreinte 6 comprenant une portion 7, aussi appelée insert, comportant une structure en relief ou en creux destinée à former une surface d'accroche sur la première matière injectée (fig.1). Préférentiellement, ladite structure est en relief. Cette structure est préférentiellement discontinue. Elle peut ainsi être formée d'une multitude de plots 7a (fig.2) ou creusures. Cette structure discontinue est privilégiée par rapport à une structure continue telle qu'une rainure ou une languette pour un meilleur maintien de la matière. Préférentiellement, les creusures ou plots ont respectivement une profondeur ou une hauteur de minimum 0.2 mm. De préférence, les plots ou les creusures sont au nombre de 1 à 10, plus préférentiellement de 1 à 3 par 10 mm² de surface.
- Injection de ladite première matière 2 dans l'empreinte 6 munie de l'insert 7 de manière à imprimer la structure sur une partie de la première matière 2 et ainsi former la structure d'accroche pour la seconde matière 3,
- Injection de la seconde matière 3 sur la première matière 2 au moins au niveau de la surface d'accroche pour former un corps vert 8 (fig.3 et fig.4),
- Frittage du corps vert 8 pour former une ébauche,
- Usinage par ablation laser d'au moins la seconde matière 3 du corps vert 8 ou de l'ébauche pour réaliser un décor 11 se dressant sur la première matière 2 de l'ébauche, la seconde matière 3 étant creusée jusqu'à la première matière 2 pour révéler cette dernière et ne laisser subsister dans ladite seconde matière 3 qu'un décor 11,
- Finition de l'ébauche pour former l'article.

Lors de l'étape d'usinage, la première matière peut également être légèrement creusée pour enlever la matière au niveau de la zone d'accroche qui serait restée visible à côté du décor. En d'autres mots, il s'agit d'enlever la structure imprimée sur une partie de la première matière qui serait visible à côté du décor. En présence de plus de deux matières de couleurs différentes, les différentes matières peuvent être creusées pour dessiner des décors de couleurs différentes. Ainsi, en présence d'une troisième matière injectée sur la seconde matière, la troisième matière peut être creusée jusqu'à la seconde matière voire jusqu'à la première matière pour former un décor se dressant sur la seconde matière ou sur la première matière ou en partie sur la seconde matière et sur la première matière.

L'étape d'usinage par ablation laser peut être réalisée avant le frittage, c.à.d. sur le corps vert, ou après le frittage, c.à.d. sur l'ébauche.

L'ablation laser est préférentiellement réalisée avec un laser à impulsion tel qu'un laser picoseconde, nanoseconde ou femtoseconde.

Le procédé peut en outre comporter une autre étape d'usinage, aussi dite deuxième étape d'usinage, destinée à mettre dimension le corps vert et/ou l'ébauche. Préférentiellement, elle est opérée sur le corps vert avant frittage de manière à ce que la matière ne soit pas trop dure. La présente invention n'exclut pas que cette étape d'usinage soit réalisée en partie avant le frittage et en partie après le frittage.

Le procédé peut optionnellement comporter une étape de déliantage avant l'étape de frittage si les matières ont été injectées avec un système de liants organiques (paraffine, polyéthylène, etc.).

Après l'usinage par ablation laser, le procédé de fabrication comporte une étape de finition telle que du polissage, du satinage, de la matification, etc.

Dans l'exemple illustré, le dispositif d'injection comporte un moule 5 avec une partie fixe 5a formée de deux empreintes 6 avec une première empreinte 6a destinée à l'injection de la première matière 2 et une deuxième empreinte 6b destinée à l'injection de la seconde matière 3 (fig.1). La première empreinte 6a comporte l'insert 7 avec la structure en relief. Dans l'exemple, l'insert est rapporté à l'empreinte mais il pourrait également être d'un seul tenant avec le reste de l'empreinte. Lors de l'injection, la première matière 2 est injectée dans le moule 5 formé de la partie fixe 5a et de la partie mobile 5b comme montré à la figure 3 à droite. Ensuite, la partie mobile 5a avec la première matière injectée 2 est déplacée au-dessus de la partie fixe 5b de l'autre empreinte 6b pour réaliser l'injection de la seconde matière 3 (fig.3 à gauche). L'insert 7 avec une structure en relief est destiné à imprimer des creusures 2a dans la première matière 2 qui vont servir d'accroche lors de l'injection de la seconde matière 3. La figure 4 représente le corps vert 8 issu de la bi-injection avec la seconde matière 3 superposée sur la première matière 2. Le corps vert ainsi que l'ébauche à l'issue du frittage comporte une partie 4 où les deux matières 2 et 3 se superposent et plus spécifiquement s'imbriquent (fig.5). On entend par s'imbriquer qu'une des deux matières présente sur sa surface une structure remplie par l'autre matière. A la figure 5, on observe les deux matières 2 et 3 qui se superposent avec l'imbrication de l'une dans les creusures 2a formées à la surface de l'autre.

Pour former une lunette, la carotte 10 est coupée et le diamètre intérieur de la lunette est creusé lors de la deuxième étape d'usinage. Avant ou après, la seconde matière est creusée par ablation laser jusqu'au moins la première matière pour former le décor 11 dans une couleur distincte du substrat formé par la lunette.

Typiquement, une lunette 1 selon les figures 6 et 7 est obtenue par injection d'une zircone blanche et d'une zircone noire et par frittage à une température de 1400°C pendant un temps de 48 heures sous une atmosphère oxydante.

### Légende

- (1): Article, composant horloger ou lunette
- (2): Première matière, aussi dite céramique
a. Creusure
- (3): Seconde matière, aussi dite céramique
- (4): Partie de l'article
- (5): Moule
a. Partie fixe
b. Partie mobile
- (6): Empreinte
a. Première empreinte
b. Seconde empreinte
- (7): Insert, aussi dit portion de l'empreinte
a. Plot
- (8): Corps vert
- (9): Carotte du corps vert
- (10): Décor

## Revendications

1. Procédé de fabrication par injection d'un article en cermet et/ou en céramique multicolore avec un décor (11) en relief, ledit procédé comprenant les étapes suivantes :
- Mise à disposition d'au moins une première matière (2) et une seconde matière (3), ladite première matière (2) se distinguant de la seconde matière (3) par sa couleur, lesdites première (2) et seconde (3) matières étant soit une céramique, soit un cermet,
- Mise à disposition d'un moule (5) avec une empreinte (6) comprenant une portion (7) comportant une structure en relief ou en creux destinée à former une surface d'accroche sur la première matière (2) après injection,
- Injection de ladite première matière (2) dans l'empreinte (6) munie de la portion (7) de manière à imprimer la structure sur une partie de la première matière (2) et ainsi former la surface d'accroche sur ladite partie,
- Injection de la seconde matière (3) sur la première matière (2) au moins au niveau de la surface d'accroche pour former un corps vert (8),
- Frittage du corps vert (8) pour former une ébauche,
- Usinage par ablation laser de la seconde matière (3) sur le corps vert (8) ou sur l'ébauche pour réaliser le décor (11) en relief, ladite seconde matière (3) étant creusée par ablation laser au moins jusqu'à la première matière (2) pour révéler ladite première matière (2) et obtenir le décor (11) en relief dans ladite seconde matière (3) se dressant sur la première matière (2),
- Finition de l'ébauche pour obtenir l'article.

2. Procédé de fabrication selon la revendication 1, **caractérisé en ce que** la structure de la portion (7) est discontinue.

3. Procédé de fabrication selon la revendication 1 ou 2, **caractérisé en ce que** la structure de la portion (7) est en relief.

4. Procédé de fabrication selon la revendication précédente, **caractérisé en ce que** la structure de la portion (7) est formée d'une multitude de plots (7a).

5. Procédé de fabrication selon la revendication 1 ou 2, **caractérisé en ce que** la structure de la portion (7) est en creux et formée d'une multitude de creusures.

6. Procédé de fabrication selon l'une des revendications précédentes, **caractérisé en ce que** la seconde matière (3) est injectée sur la première matière (2) pour former le corps vert (8) comprenant deux couches superposées avec une couche de la première matière (2) et une couche de la seconde matière (3), lesdites couches étant imbriquées l'une dans l'autre au niveau de la surface d'accroche.

7. Procédé de fabrication selon l'une des revendications précédentes, **caractérisé en ce que** la première matière (2) est partiellement creusée pour faire disparaître la surface d'accroche.

## Patentansprüche

1. Verfahren zur Herstellung durch Einspritzen eines Artikels aus Cermet und/oder mehrfarbiger Keramik mit einem Dekor (11) als Relief, wobei dieses Verfahren folgende Schritte umfasst:
- Bereitstellen mindestens eines ersten Materials (2) und eines zweiten Materials (3), wobei sich das erste Material (2) durch seine Farbe vom zweiten Material (3) unterscheidet, wobei das erste (2) Material und das zweite (3) Material entweder eine Keramik oder ein Cermet sind,
- Bereitstellen einer Form (5) mit einer Kavität (6) mit einem Bereich (7), umfassend eine Relief- oder eine vertiefte Struktur zur Bildung einer Haftfläche auf dem ersten Material (2) nach der Einspritzung,
- Einspritzen des ersten Materials (2) in die Kavität (6) mit dem Bereich (7), um die Struktur auf einen Teil des ersten Materials (2) einzuprägen und so die Haftfläche auf diesem Teil zu bilden,
- Einspritzen des zweiten Materials (3) auf das erste Material (2) mindestens auf Höhe der Haftfläche, um einen Grünkörper (8) zu bilden,
- Sintern des Grünkörpers (8), um einen Rohling zu bilden,
- Laserabtrag der zweiten Materialschicht (3) auf dem Grünkörper (8) oder der Vorform, um das erhabene Dekor (11) auszubilden, wobei die zweite Materialschicht (3) durch Laserablation mindestens bis zur ersten Materialschicht (2) abgetragen wird, sodass diese freigelegt wird und das erhabene Dekor (11) in der zweiten Materialschicht (3) über der ersten Materialschicht (2) entsteht,
- Endbearbeiten des Rohlings, um den Artikel zu erhalten.

2. Herstellungsverfahren nach Anspruch 1, **dadurch gekennzeichnet, dass** die Struktur der Portion (7) diskontinuierlich ist.

3. Herstellungsverfahren nach einem der Ansprüche 1 oder 2, **dadurch gekennzeichnet, dass** die Struktur des Abschnitts (7) als Relief ausgebildet ist.

4. Herstellungsverfahren nach dem vorstehenden Anspruch, **dadurch gekennzeichnet, dass** die Struktur des Abschnitts (7) aus einer Vielzahl von Noppen (7a) besteht.

5. Herstellungsverfahren nach einem der Ansprüche 1 oder 2, **dadurch gekennzeichnet, dass** die Struktur des Abschnitts (7) vertieft und aus einer Vielzahl von Vortiefungen gebildet ist.

6. Herstellungsverfahren nach einem der vorhergehenden Ansprüche, **dadurch gekennzeichnet, dass** die zweite Materialkomponente (3) auf die erste Materialkomponente (2) eingespritzt wird, um den Grünkörper (8) mit zwei übereinander angeordneten Schichten zu bilden, wobei eine Schicht aus der ersten Materialkomponente (2) und eine Schicht aus der zweiten Materialkomponente (3) besteht und die Schichten im Bereich der Haftoberfläche ineinander greifen.

7. Herstellungsverfahren nach einem der vorhergehenden Ansprüche, **dadurch gekennzeichnet, dass** das erste Material (2) teilweise ausgehöhlt wird, um die Haftfläche zu entfernen.

## Claims

1. A method for manufacturing by injection a multicolour cermet and/or ceramic article with a relief decoration (11), said method comprising the following steps:
- Providing at least one first material (2) and one second material (3), said first material (2) being distinguished from the second material (3) by its colour, said first (2) and second (3) materials being either a ceramic or a cermet,
- Providing a mould (5) with a pattern cavity (6) comprising a portion (7) including a relief or hollow structure intended to form a hooking surface on the first material (2) after injection,
- Injecting said first material (2) into the pattern cavity (6) provided with the portion (7) so as to print the structure on a portion of the first material (2) and thus form the hooking surface on said portion,
- Injecting the second material (3) onto the first material (2) at least at the hooking surface to form a green body (8),
- Sintering the green body (8) to form a movement-blank,
- Machining, by laser ablation, the second material (3) on the green body (8) or on the movement-blank to make the relief decoration (11), said second material (3) being hollowed out by laser ablation at least to the first material (2) to reveal said first material (2) and obtain the relief decoration (11) in said second material (3) standing on the first material (2),
- Finishing the movement-blank to obtain the article.

2. The manufacturing method according to claim 1, **characterised in that** the structure of the portion (7) is discontinuous.

3. The manufacturing method according to claim 1 or 2, **characterised in that** the structure of the portion (7) is in relief.

4. The manufacturing method according to the preceding claim, **characterised in that** the structure of the portion (7) is formed of a multitude of studs (7a).

5. The manufacturing method according to claim 1 or 2, **characterised in that** the structure of the portion (7) is hollow and formed of a multitude of recesses.

6. The manufacturing method according to one of the preceding claims, **characterised in that** the second material (3) is injected onto the first material (2) to form the green body (8) comprising two superimposed layers with a layer of the first material (2) and a layer of the second material (3), said layers being interlocked with each other at the hooking surface.

7. The manufacturing method according to one of the preceding claims, **characterised in that** the first material (2) is partially hollowed out to remove the hooking surface.
